# EUROPEAN PATENT SPECIFICATION

(11) **EP 3 822 765 B1**
(45) Date of publication and mention of the grant of the patent: **06.11.2024**
(21) Application number: 19209122.1
(22) Date of filing: 14.11.2019
(51) Int. Cl.: G06F 3/12

(54) **DUPLEX PRINTING RECOVERY ON A FRONT SIDE**
DUPLEXDRUCKRÜCKGEWINNUNG AUF EINER VORDERSEITE
RÉCUPÉRATION D'IMPRESSION DUPLEX SUR UN CÔTÉ AVANT

(43) Date of publication of application: 19.05.2021
(73) Proprietor: Canon Production Printing Holding B.V., 5914 HH Venlo (NL)
(72) Inventor: GRILLAS, Mathieu A., 5914 HH Venlo (NL); DEBROISE, Anne-Gaëlle S., 5914 HH Venlo (NL); VOUHE, Benjamin, 5914 HH Venlo (NL); PÉCHINÉ, Emmanuel, 5914 HH Venlo (NL); LEROY, Valérie, 5914 HH Venlo (NL); SUQUET, Hervé R.J., 5914 HH Venlo (NL)
(74) Representative: Canon Production Printing IP Department

(56) References cited:
- US-A1- 2015 170 011

## Description

### FIELD OF THE INVENTION

The present invention is related to a method of recovering a duplex printing job on a roll-to-roll printer on a front side of a printing medium as well as a corresponding computer program, data storage medium, printing controller and roll-to-roll printer.

### BACKGROUND ART

In roll-to-roll printers executing duplex (or: double-sided) printing jobs, where first images are printed on a front side of a printing medium and then back images are printed on a back side of the printing medium, errors can occur during execution of the duplex printing job. The back images on the back side of the printing medium each have to be exactly aligned with the corresponding images on the front side of the printing medium.

In case an error like paper jam or smudging of ink occurs on the front side of the printing medium, the duplex printing job has to be stopped, the error fixed and the duplex printing job resumed. In order to recover from such error, an operator of a roll-to-roll printer has to cut the printing medium at an end of a printing bed of the roll-to-roll printer and at an end of uncured printed printing medium after the duplex printing job has been executed. The printed printing medium which was wound on a take-up roll during the duplex printing job has to be removed from the printer and a new take-up roll has to be provided to the printer. Then the stopped printing job is resumed at a beginning of the image in which the error occurred. This will result in two take-up rolls each carrying printing medium printed with a part of the images of the whole duplex printing job on the front side. Thus the duplex printing job on the back side requires two loading operations each comprising specific manual operations like registration and manual image rescheduling by the operator. This is time consuming and increases manufacturing costs. Furthermore, in the absence of registration markers for each image, the front-back registration will be lost for the first take-up roll.

US 2015/0170011 A1 discloses a controlling apparatus, which controls a first printing apparatus that prints an image on a continuous sheet and a second printing apparatus that prints on the continuous sheet on a downstream side in a conveyance direction of the continuous sheet, stores a printing state of the first printing apparatus and a second printing apparatus. When an error is detected in the first printing apparatus, conveyance of the continuous sheet is suspended, and occurrence position of the error is specified. When it is detected that the error is solved, and conveyance of the continuous sheet is restarted, control is performed such that the second printing apparatus performs printing on the continuous sheet on which printing has been finished by the first printing apparatus before the detection of the error, based on the specified occurrence position of the error.

It is an object of the present invention to provide a method, computer program, printing controller and roll-to-roll printer which provide a faster and more low cost recovery of duplex printing jobs. Independent claim 1 is directed towards a corresponding method of recovering a duplex printing job on a roll-to-roll printer on a front side of a printing medium. Further aspects of the present invention are subject of the further independent claims. Embodiments and refinements of the present invention are subject of the respective dependent claims.

Although the invention is explained herein with respect to a roll-to-roll printer that applies a curing step to the marking material deposited on the print medium, the invention is equally applicable to a roll-to-roll printer that does not apply a curing step. The curing step is simply included in the descriptions inhere because the curing step requires additional consideration that is not present in a roll-to-roll printer not applying a curing step.

According to a first aspect of the present invention a method of recovering a duplex printing job on a roll-to-roll printer on a front side of a printing medium comprises the steps of:
c) cutting the printing medium at an end of a printing bed of the roll-to-roll printer after the duplex printing job was stopped, clean-cutting an uncured part of the printing medium and removing the clean-cut uncured part of the printing medium;
d) connecting a trailing end of a remaining clean-cut printing medium with a leading end of an unprinted printing medium;
e) Determining an offset in case an error occurred in the duplex printing job on the front side of the printing medium and the duplex printing job was stopped.
f) Storing the determined offset.
g) Resuming the duplex printing job on the front side of the printing medium at the position where the duplex printing job was stopped with a beginning of the image in which the error occurred.

The offset is based on a distance between the start of an image that was not fully secured (completely printed and cured) before the duplex printing job was stopped (and therefore requires reprinting) and the location of the print head (where the reprinting of the image will occur on resumption). The stored offset is to be applied for a back image that has to be aligned on a back side of the printing medium correspondingly to the image that was resumed in step g) on the front side of the printing medium, thus restoring the possibility to print with a correct front-back registration for both parts of the print jobs: the part that was printed before the error occurred as well as the part that was printed thereafter.

According to a second aspect of the present invention a computer program comprises instructions which, when the program is executed by a computer, cause the computer to carry out the method of recovering a duplex printing job on a roll-to-roll printer on a front side of a printing medium according to the first aspect of the present invention.

According to a third aspect of the present invention a printing controller is arranged and configured for executing the method of recovering a duplex printing job on a roll-to-roll printer on a front side of a printing medium according to the first aspect of the present invention.

According to a fourth aspect of the present invention a roll-to-roll printer for (or: enabling) recovering a duplex printing job on a front side of a printing medium comprises a printing bed, a printing head, a conveying system, a printing controller according to the third aspect of the present invention and a storage. The printing head is located at a beginning of the printing bed and arranged and configured for printing images on the printing medium. The conveying system is arranged and configured for conveying the printing medium along the printing bed. The printing controller is further arranged and configured for controlling the printing head and the conveying system. The storage is arranged and configured for storing the offset.

According to a fifth aspect of the present invention a non-transitory, computer-readable data storage medium comprises instructions which, when the instructions are executed by a computer, cause the computer to carry out the method of recovering a duplex printing job on a roll-to-roll printer on a front side of a printing medium according to the first aspect of the present invention.

According to a sixth aspect of the present invention, a data stream is provided which comprises, or is configured to generate, executable program code configured to, when executed, perform the method of recovering a duplex printing job on a roll-to-roll printer on a front side of a printing medium according to the first aspect of the present invention.

After the duplex printing job has been stopped due to an error, the printing job has to be recovered. The error may be present in an image that was still being printed at the moment the error was detected and the duplex printing job was stopped, respectively. The error may also be present in an image that was finished at the moment the error was detected/the duplex printing job was stopped and already another image was being printed at the moment the error was detected/the duplex printing job was stopped.

Depending on the location of the error, the offset for the back image on the back side of the printing medium that has to be aligned with the image in which the error occurred on the front side of the printing medium is determined. In case the error is present in an image that was still being printed at the moment the error was detected and the duplex printing job was stopped, respectively, the offset corresponds to the distance between the start of the first image that is to be reprinted and the location of the print head.

The printed length is the length from a beginning of the respective image to the location of the printing head of the roll-to-roll printer. This information about the length can for example be retrieved from a raster image file of the duplex printing job and a progress information from the conveying system of the roll-to-roll printer. The offset corresponds to the (already) printed length (i.e. complete length) between the first image that will be reprinted and the location in the raster image file that was being printed at the moment the error was detected/the duplex printing job was stopped. This distance may not only cover the image that was being printed but may include additional images that were still being cured.

The determined offset is stored afterwards. The offset can be stored in the storage of the roll-to-roll printer. The storage can be data storage like a magnetic storage/memory (e.g. magnetic-core memory, magnetic tape, magnetic card, magnet strip, magnet bubble storage, drum storage, hard disc drive, floppy disc or removable storage), an optical storage/memory (e.g. holographic memory, optical tape, Tesa tape, Laserdisc, Phasewriter (Phasewriter Dual, PD), Compact Disc (CD), Digital Video Disc (DVD), High Definition DVD (HD DVD), Blu-ray Disc (BD) or Ultra Density Optical (UDO)), a magneto-optical storage/memory (e.g. MiniDisc or Magneto-Optical Disk (MO-Disk)), a volatile semiconductor/solid state memory (e.g. Random Access Memory (RAM), Dynamic RAM (DRAM) or Static RAM (SRAM)), a non-volatile semiconductor/solid state memory (e.g. Read Only Memory (ROM), Programmable ROM (PROM), Erasable PROM (EPROM), Electrically EPROM (EEPROM), Flash-EEPROM (e.g. USB-Stick), Ferroelectric RAM (FRAM), Magnetoresistive RAM (MRAM) or Phase-change RAM) or a data carrier/medium.

After the offset has been determined and stored (and after the error has been fixed) the duplex printing job is resumed on the front side of the printing medium. The duplex printing job is resumed at the beginning of the first unsecured image. There is no need for a change of the take-up roll.

Consequently, on the back side of the printing medium a length according to the stored offset has to be additionally skipped (in addition to the original inter image margin) during printing of the back side in order to ensure correct alignment of the corresponding back image with the image in which the error has occurred and which has been resumed in step g).

The printing controller can be any type of data processing equipment like a Microcontroller (µC), an integrated circuit, an Application-Specific Integrated Circuit (ASIC), an Application-Specific Standard Product (ASSP), a Digital Signal Processor (DSP), a Field Programmable Gate Array (FPGA) and the like.

The present invention thus provides for a faster completion after an error in a duplex printing job occurred, because the take-up roll does not have to be changed after the error has been fixed and the duplex printing job is resumed. This also ensures a reduction of wasted printing medium as no new take-up roll has to be equipped with the printing medium (certain length of unprinted medium has to be wound up a new take-up roll before printing can start/be resumed).

According to a refinement of the present invention the method further comprises the steps of:
h) Printing a back side of the printing medium, wherein back images are printed in alignment to respective printed images on the front side of the printing medium.
i) Applying the stored offset for the back image that has to be aligned on the back side of the printing medium correspondingly to the image that was resumed in step g) such that said back image is aligned with the image resumed in step g) on the front side of the printing medium.

After the erroneous duplex printing job has been recovered and finished on the front side of the printing medium, the take-up roll with the printed printing medium is installed in the roll-to-roll printer for printing of the back side. When printing of the back side has completed the back side image of the first image that was reprinted, an additional length according to the offset is skipped (not printed but only conveyed further on the take-up roll). During back side printing the offset is applied after the printing of the back side image of the first reprinted image, because during printing of the back side, the image are in reverse order compared to printing the front side.

After the offset has been considered and the corresponding length of the printing medium was conveyed to the take-up roll, the back image corresponding to the last secured image before the error occurred on the front side is printed on the back side of the printing medium. Thus, the image in which the error occurred on the front side and the corresponding back image on the back side of the printing medium are correctly aligned to each other. Also the subsequent images on the front side and their respective back images on the back side are in correct alignment.

According to a refinement of the present invention the method further comprises the step of:
b) Stopping the duplex printing job in case an error occurs on the front side of the printing medium.

When an error like paper jam or smudging of ink occurs during execution of the duplex printing job, the duplex printing job has to be stopped such that a source of error can be found and cleared. After the error has been fixed, the duplex printing job can be recovered with the subsequent steps (e.g. steps e), f) and g)) and a normal state of function is restored.

Stopping the erroneous duplex printing job enables leading the roll-to-roll printer back to the normal state of operation, where the risk of anew erroneous function is minimised.

According to a refinement of the present invention the method further comprises the step of:
a) Detecting an error in the duplex printing job on the front side of the printing medium.

In case an error (e.g. paper jam, smudging of ink etc.) occurs during the duplex printing job the error has to be detected in order to avoid bad printouts or even damage to the roll-to-roll printer (e.g. in case of paper jam). An error can be automatically detected by means of sensors or it can be detected by an operator of the roll-to-roll printer. For example a camera can detect smudged ink in an image or a tension sensor can detect change in the tension of the printing medium which is indicative of paper jam and/or (partially) torn printing medium. Also the operator can visually detect such errors.

Especially automatic detection of errors provide for fast and reliable detection of errors even at high speed of the printing medium.

According to a further refinement the roll-to-roll printer further comprises a cutting and connecting area. The cutting and connecting area includes a flat and accessible surface for connecting the trailing end of the remaining clean-cut printing medium with the leading end of the unprinted printing medium.

An error like paper jam or (partially) torn paper may lead to parts of the printing medium being damaged and unusable for further usage in the roll-to-roll printer due to high risk of (anew) paper jam or torn printing medium after resuming the duplex printing job. Thus, the respective damaged part of printing medium has to be removed. Thereto, the printing medium is cut at the end of the printing bed.

The printing medium is further clean-cut from the damaged part of printing medium by cutting the printing medium at a position where the whole damaged part of the printing medium can be removed or at a position where the printing medium was stopped being printed by the printing head, which is a uncured part of the printing medium that is located in the printing bed of the roll-to-roll printer at the time the duplex printing job is stopped (due to a detected error).

Especially a cutting and connecting area that is flat and accessible for the operator is advantageous. On the flat surface, the paper can be easily cut and the better the cutting and connection area is accessible, the easier the leading edge of the unused printing medium can be connected with trailing edge of the (already printed and cured) printing medium (on the take-up roll).

Consequently the present invention ensures damage-free printing medium such that the risk of the duplex printing job leading to another error due to paper jam or torn paper is reduced.

According to a refinement of the present invention step c) further comprises the step of conveying the printing medium until the uncured part of the printing medium is completely conveyed out of the printing bed of the roll-to-roll printer after the step of cutting and before the step of clean-cutting of step c).

The uncured part of the printing medium is the part of the printing medium that is located in the printing bed of the roll-to-roll printer at the time the duplex printing job is stopped (due to a detected error). The uncured part is the part, where the error occurred and where the (possibly) damaged part of paper is located at. The uncured part of the printing medium is conveyed completely out of the printing bed and then clean-cut such that the uncured part or damaged part of the printing medium can be removed.

Cutting and clean-cutting of the printing medium after the printing bed provides for particular easy and precise removal of damaged printing medium.

According to a refinement of the present invention an embedded knife of the roll-to-roll printer located at the end of the printing bed of the roll-to-roll printer is used for cutting and clean-cutting of step c).

According to a further refinement of the present invention the roll-to-roll printer further comprises an embedded knife. The embedded knife is located at the end of the printing bed and arranged and configured for cutting and clean-cutting the printing medium.

Using of the integrated knife for cutting and clean-cutting of the printing medium in step c) provides for a particularly safe, fast and precise cutting action.

According to a refinement of the present invention step c) further comprises the steps of clean-cutting of a cured part of the printing medium on which the image in which the error occurred was printed and cured, removing the clean-cut cured part of the printing medium and of conveying the trailing end of the clean-cut printing medium back to the position where the printing medium was cut in step c) and wherein in step d) the offset is based on a length of the printing bed of the roll-to-roll printer.

Additionally to the uncured part of the printing medium a cured part of the image in which the error occurred can be clean-cut. Then only completed and non-erroneous images remain on the printing medium. The trailing edge of the clean-cut printing medium is moved back to the position, where the first cutting of the printing medium was executed (e.g. the end of the printing bed) and connected with the leading edge of the unprinted printing medium. Thus, the offset that has to be considered for the correct alignment of the respective back image on the back side of the printing medium with the resumed image in which the error occurred on the front side of the printing medium is equal to the length of the printing bed.

The additional clean-cutting of the printed part of the image in which the error occurred provides for a final print out, that is free of erroneous or unfinished/partial images.

According to a refinement of the present invention step d) further comprises the step of establishing a tension of the printing medium equal to a tension before the steps of cutting and clean-cutting in step c) have been executed is established after the printing medium has been connected.

The tension of the printing medium can be measured by means of a corresponding force sensor like a tension sensor at a feeding roll and/or at a take-off roll of the roll-to-roll printer. Correct readjustment of the tension of the printing medium before the duplex printing job is resumed to a value before the printing medium was cut, provides for equal basic conditions before stopping and after resuming the duplex printing job.

Said equal basic conditions provide for highly precise alignment of the corresponding back image to the image in which the error occurred.

According to a refinement of the present invention in step d) the trailing end of the remaining clean-cut printing medium and the leading end of the unprinted printing medium are manually or automatically taped together.

Manual or automatic taping provides for a very precise and durable connection between the clean-cut printing medium and the unprinted printing medium.

According to a refinement of the present invention in step d) the trailing end of the remaining clean-cut printing medium and the leading end of the unprinted printing medium are manually or automatically punched together.

Manual or automatic punching provides for a very simple and yet durable connection between the clean-cut printing medium and the unprinted printing medium.

The present invention and its technical field are subsequently explained in further detail by an exemplary embodiment shown in the drawings. The exemplary embodiment only conduces better understanding of the present invention.
- Fig. 1: shows a schematic flow chart of a method of recovering a duplex printing job on a roll-to-roll printer on a front side of a printing medium according to the first aspect of the present invention.
- Fig. 2: shows schematic view of a roll-to-roll printer for recovering a duplex printing job on a front side of a printing medium according to the second aspect of the present invention.
- Fig. 3: shows a schematic view of an embodiment of recovering a duplex printing job on a front side of a printing medium.
- Figs. 4A-4C: show schematic views of another embodiment of recovering a duplex printing job on a front side of a printing medium.
- Figs. 5A-5D: show schematic views of another embodiment of recovering a duplex printing job on a front side of a printing medium.

In the following same or equal elements will be referenced with the same reference numerals. Further, such same or equal elements will not be described in detail for every embodiment but only once for all embodiments.

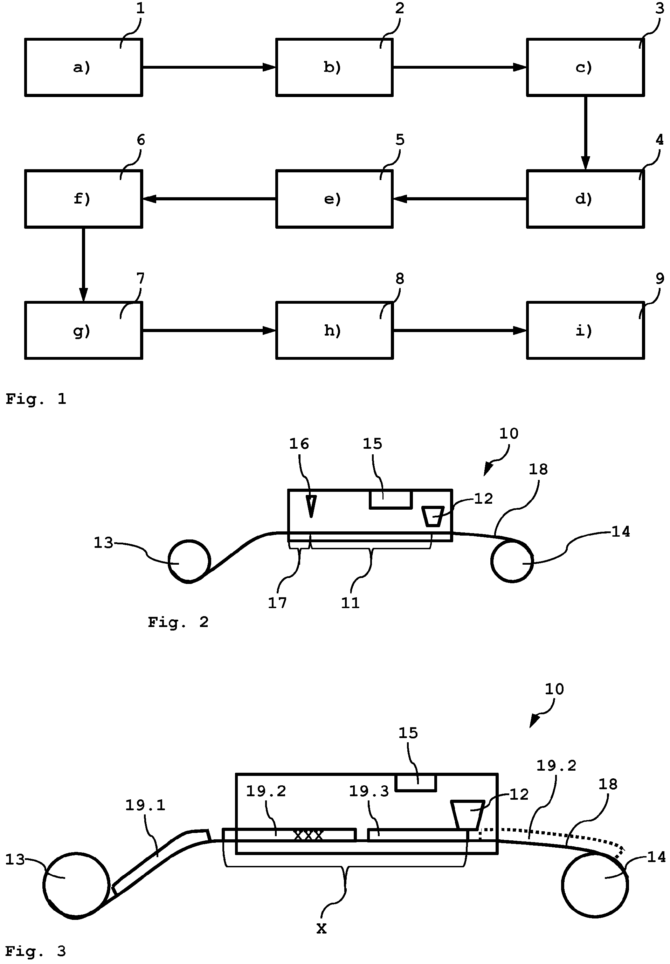

In Fig. 1 a flow chart of a method of recovering a duplex printing job on a roll-to-roll printer on a front side of a printing medium according to the first aspect of the present invention is schematically depicted. In a step a) of detecting 1, an error in the duplex printing job on the front side of the printing medium is detected. For example a camera can detect printing errors like smudging of ink and/or a tension sensor can detect paper jam or (partially) torn printing medium.

In a step b) of stopping 2, the duplex printing job is stopped in case an error occurs on the front side of the printing medium. After an error has been detected the duplex printing job is stopped so that an error cause can be corrected and the error be fixed.

In a step c) of cutting 3, the printing medium is cut after the duplex printing job was stopped at an end of a printing bed of the roll-to-roll printer. Further, an uncured part of the printing medium is clean-cut and the clean-cut uncured part of the printing medium is removed. Thereto, the uncured part of the printing medium extending along the printing bed is conveyed out of the printing bed after the printing medium is cut and then the uncured part of printing medium is clean-cut and removed.

Additionally, a cured part of the printing medium on which the image in which the error occurred was printed and cured can be clean-cut and removed then the trailing end of the clean-cut printing medium is conveyed back to the position where the printing medium was cut before. The cutting actions in step c) can be executed by an embedded knife of the roll-to-roll printer located at the end of the printing bed.

In a step d) of connecting 4, a trailing end of a remaining clean-cut printing medium is connected with a leading end of an unprinted printing medium. Both ends may be connected by automatic or manual taping or punching. Further, a tension of the printing medium equal to a tension before the steps of cutting and clean-cutting in step c) have been executed is established after the printing medium has been connected.

Further, in a step e) of determining 5, an offset is determined in case an error occurred in the duplex printing job on the front side of the printing medium and the duplex printing job was stopped. The offset is based on a printed length of an image in which the error occurred and in case the image in which the error occurred was already completely printed additionally based on a printed length of an image that was being printed at the moment the duplex printing job was stopped. If the cured part of the printing medium on which the image in which the error occurred was printed and cured was clean-cut in step c) then the offset is based on a length of the printing bed of the roll-to-roll printer.

In a step f) of storing 6, the determined offset is stored. The determined offset can be stored in a storage of the roll-to-roll printer.

After the offset is stored (and the error fixed) the duplex printing job is resumed on the front side of the printing medium at the position where the duplex printing job was stopped with a beginning of the image in which the error occurred, in a step g) of resuming 7.

In a step h) of printing 8, a back side of the printing medium is printed. Here, back images are printed in alignment to respective printed images on the front side of the printing medium. In a step i) of applying 9, the stored offset for the back image that has to be aligned on the back side of the printing medium has to be applied correspondingly to the image that was resumed in step g) such that said back image is aligned with the image resumed in step g) on the front side of the printing medium.

In Fig. 2 a view of a roll-to-roll printer 10 for recovering a duplex printing job on a front side of a printing medium according to the second aspect of the present invention. The roll-to-roll printer comprises a printing bed 11, a printing head 12, a conveying system comprising a take-up roll 13 and a feeding roll 14, a printing controller 15, a storage (not depicted), an embedded knife 16 and a cutting and connecting area 17. The printing head 12 is located at a beginning of the printing bed 11.

The feeding roll 14 is located at an upstream position of the roll-to-roll printer 10 and the take-up roll 13 is located at a downstream position of the roll-to-roll printer 10. The embedded knife 16 is located at an end of the printing bed 11 and at a beginning of the cutting and connecting area 17 that is located directly adjacent to the printing bed 11. The cutting and connecting area 17 has a flat and accessible surface.

The printing head 12 is arranged and configured for printing images on the printing medium 18. The conveying system conveys the printing medium 18 along the printing bed 11 by means of the take-up roll 13 and the feeding roll 14. The printing controller 15 is arranged and configured for executing the method according to Fig.1 and further for controlling the printing head 12 and the conveying system with the take-up roll 13 and the feeding roll 14.

The storage stores the offset provided by the controller 15. The cutting and connecting area is arranged and configured for connecting the trailing end of the remaining clean-cut printing medium with the leading end of the unprinted printing medium. For example, an operator can easily access the both ends at the cutting and connecting area and manually connect the two ends or monitor the automatic connection of the both ends.

In Fig. 3 a view of an embodiment of recovering a duplex printing job on a front side of a printing medium 18 is schematically depicted. An error (indicated by the three Xs in Fig. 3) occurred during the duplex printing job. The error was detected and the roll-to-roll printer 10 was stopped. The printing controller 15 determines an offset X that has to be applied when the back side of the printing medium 18 is printed. Here, the error occurred in an image 19.2 and while an image 19.3 was being printed. The offset X corresponds to the complete printed length of the image 19.2 in which the error occurred and the printed length of the image 19.3. Here, the printed length is the length from a beginning of the respective image (19.1, 19.2, 19.3) to the location of the printing head 12 of the roll-to-roll printer 10.

After the error cause has been corrected, the printing job is resumed with the beginning of image 19.2 (depicted with dashed lines) in which the error occurred on the front side of the printing medium 18. The whole image 19.2 and the whole image 19.3 (and any subsequent images) will be reprinted after the duplex printing job is resumed.

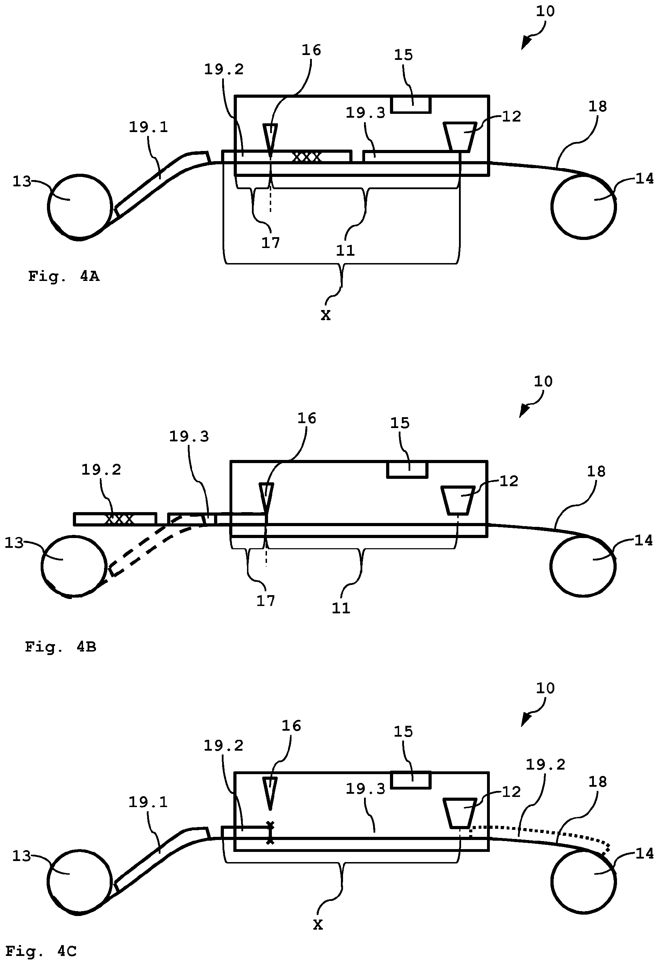

In Figs. 4A-4C views of another embodiment of recovering a duplex printing job on a front side of a printing medium 18 are schematically depicted. Only the differences to the embodiment according to Fig. 3 are subsequently described. In Fig. 4A after the duplex printing job executed on the roll-to-roll printer 10 has been stopped, the printing medium 18 is cut with the embedded knife 16 at the end of the printing bed 11 (and at the beginning of the cutting and connecting area 17). In Fig. 4B a part of printing medium 18 carrying partly uncured ink and having the same length as the printing bed 11 is conveyed out of the printing bed 11 and clean-cut with the integrated knife 16.

Afterwards the uncured printed printing medium is removed. This clean-cutting of the uncured printed printing medium is particularly advantageous in case the printing medium 18 was damaged due to the error (paper jam or partially torn printing medium or the like). In Fig. 4C a leading edge of unprinted printing medium 18 is conveyed to the end of the printing bed 11 and connected to the trailing edge of the clean cut printing medium (here comprising a part of the printed an cured image 19.2) .

The offset X corresponds again to the distance of the start of image 19.2 to the print head.

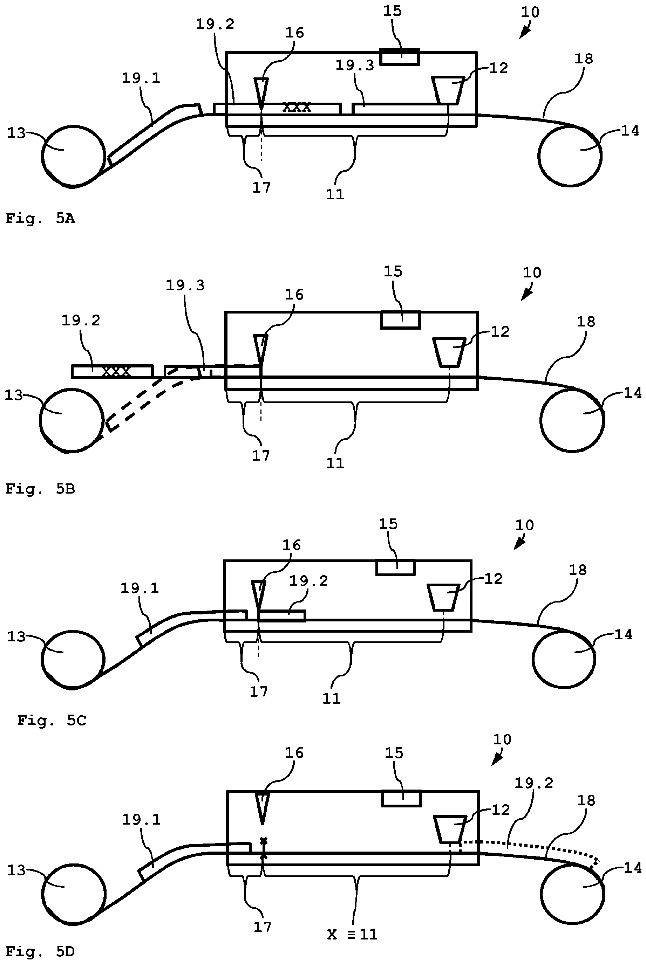

In Figs. 5A-5D views of another embodiment of recovering a duplex printing job on a front side of a printing medium 18 are schematically depicted. Figs 5A and 5B correspond to Figs. 4A and 4B. In Fig. 5C after the uncured printed printing medium 18 has been clean-cut and removed the printing medium with the cured and printed image 19.2 is conveyed back into the printing bed such that said cured and printed part of the image 19.2 can be clean-cut with the integrated knife 16 and removed. Afterwards in Fig. 5D the leading edge of the unprinted printing medium 18 is conveyed to the end of the printing bed 11 and connected with the trailing end of the printing medium 18 comprising only completely finished images 19.1. Here, the offset X corresponds to the distance from the start of image 19.2 to the print head minus the distance over which the trailing end of the printing medium 18 has been conveyed back. The printing job is then resumed with the beginning of the image 19.2 in which the error occurred.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description.

The embodiments were chosen and described in order to best explain the principles of the invention and its practical applications. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects. In the context of the present description and claims the conjunction "or" is to be understood as including ("and/or") and not exclusive ("either ... or").

## Claims

1. A method of recovering a duplex printing job on a roll-to-roll printer (10) on a front side of a printing medium (18), comprising the steps of:
e) determining (5) an offset (X) in case an error occurred in the duplex printing job on the front side of the printing medium (18) and the duplex printing job was stopped;
f) storing (6) the determined offset (X); and
g) resuming (7) the duplex printing job on the front side of the printing medium (18) at the position where the duplex printing job was stopped with a beginning of the image (19.2) in which the error occurred,
wherein the stored offset (X) is to be applied for a back image that has to be aligned on a back side of the printing medium (18) correspondingly to the image (19.2) that was resumed in step g) on the front side of the printing medium (18)
**characterized in that**
the method further comprising the steps of:
c) cutting (3) the printing medium (18) at an end of a printing bed (11) of the roll-to-roll printer (10) after the duplex printing job was stopped, clean-cutting an uncured part of the printing medium (18) and removing the clean-cut uncured part of the printing medium (18); and
d) connecting (4) a trailing end of a remaining clean-cut printing medium (18) with a leading end of an unprinted printing medium (18), and wherein
the offset (X) is based on a distance between an image (19.2) that was not fully secured when the duplex printing job was stopped and the location of the print head.

2. The method according to claim 1, further comprising the steps of:
h) printing (8) a back side of the printing medium (18), wherein back images are printed in alignment to respective printed images (19.1, 19.2, 19.3) on the front side of the printing medium (18); and
i) applying (9) the stored offset (X) for the back image that has to be aligned on the back side of the printing medium (18) correspondingly to the image (19.2) that was resumed in step g) such that said back image is aligned with the image (19.2) resumed in step g) on the front side of the printing medium (18).

3. The method according to claim 1 or 2, further comprising the step of:
b) stopping (2) the duplex printing job in case an error occurs on the front side of the printing medium (18).

4. The method according to claim 3, further comprising the step of:
a) detecting (1) an error in the duplex printing job on the front side of the printing medium (18).

5. The method according to claim 1, wherein step c) further comprises the step of conveying the printing medium (18) until the uncured part of the printing medium (18) is completely conveyed out of the printing bed (11) of the roll-to-roll printer (10) after the step of cutting and before the step of clean-cutting of step c).

6. The method according to claim 5, wherein an embedded knife (16) of the roll-to-roll printer (10) located at the end of the printing bed (11) of the roll-to-roll printer (10) is used for cutting and clean-cutting of step c).

7. The method according to any of claims 1 to 6, wherein step c) further comprises the steps of clean-cutting of a cured part of the printing medium (18) on which the image (19.2) in which the error occurred was printed and cured, removing the clean-cut cured part of the printing medium (18) and of conveying the trailing end of the clean-cut printing medium (18) back to the position where the printing medium (18) was cut in step c) and wherein in step d) the offset (X) is based on a length of the printing bed (11) of the roll-to-roll printer (10).

8. The method according to any of claims 1 to 7, wherein step d) further comprises the step of establishing a tension of the printing medium (18) equal to a tension before the steps of cutting and clean-cutting in step c) have been executed is established after the printing medium (18) has been connected.

9. The method according to any of claims 1 to 8, wherein in step d) the trailing end of the remaining clean-cut printing medium (18) and the leading end of the unprinted printing medium (18) are manually or automatically taped or punched together.

10. A computer program comprising instructions which, when the program is executed by a computer, cause the computer to carry out the method of recovering a duplex printing job on a roll-to-roll printer (10) on a front side of a printing medium (18) according to any preceding claim.

11. A printing controller (15) arranged and configured for executing the method of recovering a duplex printing job on a roll-to-roll printer (10) on a front side of a printing medium (18) according to any of claims 1 to 9.

12. A roll-to-roll printer (10) for recovering a duplex printing job on a front side of a printing medium (18), comprising:
- a printing bed (11);
- a printing head (12) located at a beginning of the printing bed (11) and arranged and configured for printing images on the printing medium (18);
- a conveying system (13, 14) arranged and configured for conveying the printing medium (18) along the printing bed (11);
- a printing controller (15) according to claim 11 further arranged and configured for controlling the printing head (12) and the conveying system (13, 14); and
- a storage arranged and configured for storing the offset (X).

13. A roll-to-roll printer (10) according to claim 12, further comprising:
- a cutting and connecting area (17) including a flat and accessible surface for connecting the trailing end of the remaining clean-cut printing medium (18) with the leading end of the unprinted printing medium (18).

14. A roll-to-roll printer (10) according to claim 12 or 13, further comprising:
- an embedded knife (16) located at the end of the printing bed (11) arranged and configured for cutting and clean-cutting the printing medium (18).

## Patentansprüche

1. Verfahren zum Wiederherstellen eines Duplexdruckauftrags auf einem Rolle-zu-Rolle-Drucker (10) auf einer Vorderseite eines Druckmediums (18), das die folgenden Schritte umfasst:
e) die Bestimmung (5) einer Ausgleichung (X), falls bei dem Duplexdruckauftrag ein Fehler auf der Vorderseite des Druckmediums (18) aufgetreten ist und der Duplexdruckauftrag angehalten wurde;
f) Speichern (6) der ermittelten Ausgleichung (X); und
g) Wiederaufnahme (7) des Duplexdruckauftrags auf der Vorderseite des Druckmediums (18) an der Stelle, an der der Duplexdruckauftrag angehalten wurde, mit einem Anfang des Bildes (19.2) in dem der Fehler aufgetreten ist,
wobei die gespeicherte Ausgleichung (X) auf ein rückseitiges Bild anzuwenden ist das auf einer Rückseite des Druckmediums (18) auf das in Schritt g) auf der Vorderseite des Druckmediums (18) wieder aufgenommene, entsprechende Bild (19.2) auszurichten ist
**dadurch gekennzeichnet, dass**
das Verfahren außerdem die folgenden Schritte umfasst:
c) Schneiden (3) des Druckmediums (18) an einem Ende eines Druckbetts (11) des Rolle-zu-Rolle-Druckers (10), nachdem der Duplexdruckauftrag angehalten wurde, Sauberschneiden eines ungehärteten Teils des Druckmediums (18) und Entfernen des saubergeschnittenen, ungehärteten Teils des Druckmediums (18); und
d) Heften (4) eines hinteren Endes eines verbleibenden, saubergeschnittenen Druckmediums (18) an ein vorderes Ende eines unbedruckten Druckmediums (18), und wobei
die Ausgleichung (X) basiert is auf dem Abstand zwischen einem Bild (19.2), das beim Anhalten des Duplexdruckauftrags nicht vollständig gesichert war, und der Position des Druckkopfs.

2. Verfahren nach Anspruch 1 weiterhin die folgenden Schritte umfassend:
h) Bedrucken (8) einer Rückseite des Druckmediums (18), wobei die Rückseitenbilder in Ausrichtung zu den auf der Vorderseite des Druckmediums (18) jeweiligen Druckbildern (19.1, 19.2, 19.3) gedruckt werden;
und
i) Anwenden (9) der gespeicherten Ausgleichung (X) auf das rückseitige Bild, das auf der Rückseite des Druckmediums (18) auf das in Schritt g) wieder aufgenommene, entsprechende Bild (19.2) ausgerichtet werden muss, , so dass das rückseitige Bild auf das in Schritt g) wieder aufgenommene Bild (19.2) auf der Vorderseite des Druckmediums (18) ausgerichtet ist.

3. Verfahren nach Anspruch 1 oder 2 weitherhin den folgenden Schritt umfassend:
b) Anhalten (2) des Duplexdruckauftrags, wenn ein Fehler auf der Vorderseite des Druckmediums (18) auftritt.

4. Verfahren nach Anspruch 3 weiterhin den folgenden Schritt umfassend:
a) Erkennen (1) eines Fehlers im Duplexdruckauftrag auf der Vorderseite des Druckmediums (18).

5. Verfahren nach Anspruch 1, bei dem Schritt c) weiterhin den Schritt des Förderns des Druckmediums (18) umfasst, bis der ungehärtete Teil des Druckmediums (18) nach dem Schritt des Schneidens und vor dem Schritt des Sauberschneidens von Schritt c) vollständig aus dem Druckbett (11) des Rolle-zu-Rolle-Druckers (10) gefördert worden ist.

6. Verfahren nach Anspruch 5, bei dem ein eingebettetes Messer (16) des Rolle-zu-Rolle-Druckers (10), das sich am Ende des Druckbetts (11) des Rolle-zu-Rolle-Druckers (10) befindet, zum Schneiden und Sauberschneiden von Schritt c) verwendet wird.

7. Verfahren nach einem der Ansprüche 1 bis 6, bei dem Schritt c) weiterhin die Schritte des Sauberschneidens eines gehärteten Teils des Druckmediums (18), auf dem das Bild (19.2) in dem der Fehler aufgetreten ist, gedruckt und gehärtet wurde, das Entfernen des saubergeschnittenen, gehärteten Teils des Druckmediums (18) und das Fördern des hinteren Endes des saubergeschnittenen Druckmediums (18) zurück zu der Position an der das Druckmedium (18) in Schritt c) geschnitten wurde, und wobei in Schritt d) die Ausgleichung (X) auf einer Länge des Druckbetts (11) des Rolle-zu-Rolle-Druckers (10) basiert ist.

8. Verfahren nach einem der Ansprüche 1 bis 7, bei dem Schritt d) weiterhin den Schritt umfasst, dass eine Spannung des Druckmediums (18), die gleich einer Spannung vor der Ausführung der Schritte des Schneidens und Sauberschneidens in Schritt c) ist, appliziert wird, nachdem das Druckmedium (18) geheftet worden ist.

9. Verfahren nach einem der Ansprüche 1 bis 8, bei dem in Schritt d) das hintere Ende des verbleibenden, saubergeschnittenen Druckmediums (18) und das vordere Ende des unbedruckten Druckmediums (18) manuell oder automatisch zusammengeklebt oder -gestanzt werden.

10. Computerprogramm mit Befehle, die, wenn das Programm von einem Computer ausgeführt wird, den Computer veranlassen, das Verfahren zur Wiederherstellung eines Duplexdruckauftrags auf einem Rolle-zu-Rolle-Drucker (10) auf einer Vorderseite eines Druckmediums (18) gemäß einem der vorhergehenden Ansprüche auszuführen.

11. Drucksteuerung (15), die so angeordnet und konfiguriert ist, dass sie das Verfahren zur Wiederherstellung eines Duplexdruckauftrags auf einem Rolle-zu-Rolle-Drucker (10) auf einer Vorderseite eines Druckmediums (18) nach einem der Ansprüche 1 bis 9 ausführt.

12. Rolle-zu-Rolle-Drucker (10) zum Wiederherstellen eines Duplexdruckauftrags auf einer Vorderseite eines Druckmediums (18), umfassend:
- ein Druckbett (11);
- einen Druckkopf (12), der sich am Anfang des Druckbetts (11) befindet und zum Drucken von Bildern auf das Druckmedium (18) angeordnet und konfiguriert ist;
- ein Fördersystem (13, 14), das für die Förderung des Druckmediums (18) entlang das Druckbett (11) angeordnet und konfiguriert ist;
- eine Drucksteuerung (15) nach Anspruch 11, die weiterhin zur Steuerung des Druckkopfs (12) und des Fördersystems (13, 14) angeordnet und konfiguriert ist; und
- einen Speicher, der für die Speicherung der Ausgleichung (X) eingerichtet und konfiguriert ist.

13. Rolle-zu-Rolle-Drucker (10) nach Anspruch 12, weiterhin umfassend:
- einen Schneide- und Heftbereich (17) mit einer flachen und zugänglichen Oberfläche zum Heften des hinteren Endes des verbleibenden saubergeschnittenen Druckmediums (18) an das vordere Ende des unbedruckten Druckmediums (18).

14. Rolle-zu-Rolle-Drucker (10) nach Anspruch 12 oder 13, weiterhin umfassend:
- ein eingebettetes Messer (16), das sich am Ende des Druckbetts (11) befindet und angeordnet und konfiguriert ist zum Schneiden und Sauberschneiden des Druckmediums (18).

## Revendications

1. Procédé de récupération d'un travail d'impression recto-verso sur une imprimante rouleau à rouleau (10) sur le recto d'un support d'impression (18), comprenant les étapes suivantes :
e) déterminer (5) un décalage (X) dans le cas où une erreur s'est produite dans le travail d'impression recto-verso sur le recto du support d'impression (18) et que le travail d'impression recto-verso a été arrêt ;
f) stocker (6) le décalage déterminé (X) ; et
g) reprendre (7) le travail d'impression recto-verso sur le recto du support d'impression (18) au position où le travail d'impression recto-verso a été arrêté avec un début de l'image (19.2) dans lequel l'erreur s'est produite,
dans lequel le décalage stocké (X) doit être appliqué à une image arrière qui doit être alignée sur le verso du support d'impression (18) correspondant à l'image (19.2) qui a été reprise à l'étape g) sur le recto du support d'impression (18)
**caractérisé en ce que**
la procédé comprend en outre les étapes suivantes :
c) couper (3) le support d'impression (18) à une extrémité du lit d'impression (11) de l'imprimante rouleau à rouleau (10) après l'arrêt du travail d'impression recto-verso, couper net une partie non durcie du support d'impression (18) et enlever la partie non durcie proprement coupée du support d'impression (18) ; et
d) relier (4) l'extrémité arrière d'un support d'impression (18) restant et coupé net à l'extrémité avant d'un support d'impression (18) non imprimé, et dans laquelle
le décalage (X) est basé sur la distance entre une image (19.2) qui n'était pas complètement sécurisée lorsque le travail d'impression recto-verso a été arrêté et la position de la tête d'impression.

2. Procédé selon la revendication 1, comprenant en outre les étapes suivantes :
h) imprimer (8) le verso du support d'impression (18), dans lequel les images du verso étant imprimées dans l'alignement des images imprimées respectives (19.1, 19.2, 19.3) sur le recto du support d'impression (18) ; et
i) appliquer (9) le décalage stocké (X) pour l'image verso qui doit être alignée sur le verso du support d'impression (18) en fonction de l'image (19.2) qui a été reprise à l'étape g) de sorte que ladite image verso soit alignée avec l'image (19.2) reprise à l'étape g) sur le recto du support d'impression (18).

3. Procédé selon la revendication 1 ou 2, comprenant en outre l'étape suivante :
b) arrêter (2) le travail d'impression recto-verso en cas d'erreur sur le recto du support d'impression (18).

4. Procédé selon la revendication 3, comprenant en outre l'étape de :
a) détection (1) d'une erreur dans le travail d'impression recto-verso sur le recto du support d'impression (18).

5. Procédé selon la revendication 1, dans lequel l'étape c) comprend en outre l'étape de transport du support d'impression (18) jusqu'à ce que la partie non durcie du support d'impression (18) soit complètement transportée hors du lit d'impression (11) de l'imprimante rouleau à rouleau (10) après l'étape de couper et avant l'étape de couper net de l'étape c).

6. Procédé selon la revendication 5, dans lequel un couteau intégré (16) de l'imprimante rouleau à rouleau (10) situé à l'extrémité du lit d'impression (11) de l'imprimante rouleau à rouleau (10) est utilisé pour le couper et le couper net de l'étape c).

7. Procédé selon l'une des revendications 1 à 6, dans lequel l'étape c) comprend en outre les étapes suivantes : couper net une partie durcie du support d'impression (18) sur laquelle l'image (19.2) dans laquelle l'erreur s'est produite a été imprimée et durcie, l'enlèvement de la partie durcie et coupée net du support d'impression (18) et transporter de l'extrémité arrière du support d'impression coupé net (18) vers la position où le support d'impression (18) a été coupé à l'étape c) et dans lequel, à l'étape d), le décalage (X) est basé sur une longueur du lit d'impression (11) de l'imprimante rouleau à rouleau (10).

8. Procédé selon l'une des revendications 1 à 7, dans lequel l'étape d) comprend en outre l'étape d'établir une tension du support d'impression (18) égale à une tension avant l'exécution des étapes de couper et de couper net de l'étape c), après que le support d'impression (18) a été connecté.

9. Procédé selon l'une des revendications 1 à 8, dans lequel, à l'étape d), l'extrémité arrière du support d'impression restant et coupé net (18) et l'extrémité avant du support d'impression non imprimé (18) sont manuellement ou automatiquement collées ou poinçonnées ensemble.

10. Programme d'ordinateur comprenant des instructions qui, lorsque le programme est exécuté par un ordinateur, amènent l'ordinateur à exécuter le procédé de récupération d'un travail d'impression recto-verso sur une imprimante rouleau à rouleau (10) sur le recto d'un support d'impression (18) selon toute revendication précédente.

11. Dispositif de commande d'impression (15) agencé et configuré pour exécuter le procédé de récupération d'un travail d'impression recto-verso sur une imprimante rouleau à rouleau (10) sur le recto d'un support d'impression (18) selon l'une des revendications 1 à 9.

12. Imprimante rouleau à rouleau (10) pour récupérer un travail d'impression recto-verso sur le recto d'un support d'impression (18), comprenant :
- un lit d'impression (11) ;
- une tête d'impression (12) située au début du lit d'impression (11) et disposée et configurée pour imprimer des images sur le support d'impression (18) ;
- un système de transport (13, 14) agencé et configuré pour transporter le support d'impression (18) le long du lit d'impression (11) ;
- un dispositif de commande d'impression (15) selon la revendication 11, disposé et configuré pour commander la tête d'impression (12) et le système de transport (13, 14) ; et
- un stockage agencé et configuré pour stocker le décalage (X).

13. Imprimante rouleau à rouleau (10) selon la revendication 12, comprenant en outre :
- une zone de couper et de relier (17) comprenant une surface plane et accessible pour relier l'extrémité arrière du support d'impression restant et coupé net (18) avec l'extrémité avant du support d'impression non imprimé (18).

14. Imprimante rouleau à rouleau (10) selon la revendication 12 ou 13, comprenant en outre :
- un couteau intégré (16) situé à l'extrémité du lit d'impression (11), disposé et configuré pour couper et ncouper net le support d'impression (18).
